# EUROPÄISCHE PATENTSCHRIFT

(11) **EP 2 342 099 B1**
(45) Veröffentlichungstag und Bekanntmachung des Hinweises auf die Patenterteilung: **28.11.2012**
(21) Anmeldenummer: 09777431.9
(22) Anmeldetag: 24.07.2009
(51) Int. Cl.: B60R 19/18

(54) **STOSSFÄNGERQUERTRÄGER**
BUMPER CROSS BEAM
SUPPORT TRANSVERSAL DE PARE-CHOCS

(30) Priorität: 06.11.2008 DE 202008014749 U
(43) Veröffentlichungstag der Anmeldung: 13.07.2011
(73) Patentinhaber: SMP Deutschland GmbH, 79268 Bötzingen (DE)
(72) Erfinder: RINDERLEIN, Jürgen, 79279 Vörstetten (DE); LÖFFLER, Mike, 79194 Gundelfingen (DE)
(74) Vertreter: Patentanwälte Westphal, Mussgnug & Partner
(86) Internationale Anmeldenummer: PCT/EP2009/005394
(87) Internationale Veröffentlichungsnummer: WO 2010/051865

(56) Entgegenhaltungen:
- EP-A- 1 334 882
- EP-A- 2 082 924
- WO-A-2007/031226
- DE-A1- 10 239 592
- DE-A1-102004 024 468
- DE-A1-102005 017 956

## Beschreibung

Die vorliegende Erfindung betrifft einen Stoßfängerquerträger mit den Merkmalen des Oberbegriffes des Anspruchs 1. Ein entsprechender Stoßfängerquerträger ist beispielsweise aus der DE 102005017956 A1 bekannt.

Gattungsgemäße Stoßfängerquerträger werden in zahlreichen Veröffentlichungen beschrieben. So wird beispielsweise in der EP 1 334 882 B1 ein Stoßfängerquerträger mit zwei Crashboxen beschrieben, wobei die Crashboxen beabstandet zum Biegeträger angeordnet sind. In der FR 2 866 830 A1 wird ein Stoßfängerquerträger mit direkt angeformten Crashboxen beschrieben, der im Wesentlichen aus Kunststoff besteht. Gegenstand der DE 102 39 592 A1 ist ein Stoßfängerquerträger, der eine vordere und eine hintere Wand umfasst, zwischen denen sich ein Zwischenelement als Knautschzone erstreckt. Das letztgenannte Dokument offenbart das Ziel, einen Stoßfängerquerträger anzubieten, der im Hinblick auf bestimmte Tests, die zur Optimierung seiner Funktion durchgeführt werden, verbessert ist.

Üblicherweise sind an derartige Tests Bedingungen geknüpft, die ein Stoßfängerquerträger erfüllen muss, um zugelassen und eingesetzt zu werden. So darf beispielsweise bei dem sog. "Parkaufprall", der bei einer Geschwindigkeit zwischen 4 und 8 km/h erfolgt, nur der Dämpfer des Stoßfängers verformt werden, während der Stoßfänger selber möglichst unbeschädigt bleiben muss. Der sog. "Fußgängertest" zielt darauf ab, die Verletzungen eines Fußgängers bei einem Zusammenprall mit niedriger Geschwindigkeit soweit wie möglich zu verringern. Es werden zahlreiche weitere Tests durchgeführt, die darauf abzielen, bestimmte Bereiche oder bestimmte Bauteile im Kraftfahrzeug selber zu schützen, um auf diese Weise im Falle eines Zusammenstoßes den Schaden am Kraftfahrzeug gering zu halten.

So werden Aufpralltests einerseits dazu herangezogen, um Karosseriebauteile im Hinblick auf den Personenschutz zu optimieren, anderseits dienen sie aber auch dazu, den potentiellen Schaden im Falle eines Aufpralls zu ermitteln, um danach bestimmte Einklassierungen von Fahrzeugtypen in Schadensklassen vorzunehmen. Um die entsprechenden Anforderungen an die Bauteile von Kraftfahrzeugen einheitlich zu regeln, sind mittlerweile diesbezüglich auch gesetzliche Vorschriften in Kraft, die für die jeweiligen Tests festlegen, welche Bedingungen erfüllt werden müssen, um den betreffenden Anforderungen zu genügen. Dies gilt sowohl für den Personenschutz als auch für die Einordnung in Schadensklassen.

So wird beispielsweise für Stoßfängerquerträger der sog. RCAR-Barrieretest durchgeführt, der nach dem Research Council for Automobile Repairs benannt ist. Dabei wird der Stoßfängerquerträger mit einer bestimmten Geschwindigkeit gegen eine Barriere gefahren wird, womit der Zusammenstoß im Heck- oder Frontbereich mit einem gegnerischen Fahrzeug simuliert wird. Bewertet wird in diesem Fall der Schutz der dahinter liegenden Bauteile durch den Stoßfängerquerträger, wobei eine zerstörungsfreie Durchbiegung des Biegeträgers erwünscht ist, die eine Aktivierung der Crashboxen ermöglicht und somit eine Beschädigung der dahinterliegenden Fahrzeugstruktur verhindert.

Im Gegensatz zu dem RCAR-Barrieretest, der vom Bauteil eine gewisse Flexibilität erfordert, wird bei der sog. Pendelschlagprüfung (ECE-R42), die ein Touchieren beim Einparken simuliert, ausschließlich die Steifigkeit des Stoßfängerquerträgers getestet, da in diesem Fall Energie ausschließlich durch den Querträger selbst absorbiert werden soll, wobei am Biegeträger oder den Crashboxen Schäden nach Möglichkeit vermieden werden sollen. Der ECE-R42-Test simuliert einen Aufprall bei 4 km/h und stellt an den Stoßfänger die Forderung, dass keine Anbauteile abfallen oder scharfe Kanten entstehen.

Somit werden bei den beiden vorgenannten Tests gegenläufige Anforderungen an den Stoßfängerquerträger gestellt, denen auf konventionelle Weise dadurch genügt wird, dass der Stoßfängerquerträger ein bestimmtes Ausmaß an Bombierung aufweist, d. h. nach außen hin gewölbt ist, so dass ausreichend Bauraum für eine Durchbiegung beim RCAR-Barrieretest vorhanden ist und gleichzeitig aufgrund der Wölbung eine ausreichende Biegefestigkeit des Stoßfängerquerträgers für den Pendeltest besteht. Der Nachteil dieser Anordnung besteht darin, bei der Durchbiegung des Biegeträgers, insbesondere bei einem langen Biegeweg, die Gefahr besteht, dass der Biegeträger bricht, so dass der Schutz der dahinter liegenden Bauteile nicht mehr gewährleistet ist. Hinzu kommt, dass ein relativ großer Bauraum erforderlich ist, um eine ausreichende Durchbiegung des Biegeträgers für den Barrieretest zuzulassen.

Die Einsparung von Bauraum ist jedoch ein weiteres ganz zentrales Thema bei der Entwicklung von Kraftfahrzeugkarosserien oder der Gestaltung von Bauteilen.

Der vorliegenden Erfindung liegt somit das Problem zugrunde, einen Stoßfängerquerträger anzubieten, der die Nachteile des Standes der Technik nicht aufweist.

Gelöst wird diese Aufgabe durch einen Stoßfängerquerträger mit den Merkmalen des Anspruchs 1. Vorteilhafte Weiterentwicklungen des erfindungsgemäßen Stoßfängerquerträgers sind Gegenstand der Unteransprüche.

Im Folgenden wird im Rahmen der vorliegenden Erfindung das gesamte Crash-Management-System aus Biegeträger und Crashboxen als Stoßfängerquerträger bezeichnet.

Der Erfindungsgedanke besteht darin, durch eine optimale Anpassung der Geometrie des Biegeträgers an die vorgegebene Geometrie der Prüfmittel die Biegeträgerfront in Richtung der Stirnflächen der Crashboxen zu verschieben und somit im Falle eines Aufpralls (der Barriere) ein frühzeitiges Einleiten der Aufprallenergie in die Crashboxen zu ermöglichen. Durch die Reduktion des Intrusionsweges der Barriere wird die Gefahr der Zerstörung des Biegeträgers reduziert und die dahinter liegenden Teile des Kraftfahrzeugs besser geschützt. Bei dieser Anordnung wird ausgenutzt, dass der RCAR-Barrieretest, der quasi den Zusammenprall mit einem gegnerischen Kraftfahrzeug simuliert, vor allem dann positiv verläuft, wenn die Crashboxen aktiviert werden und dabei Energie abbauen, was zu einem reduzierten Verformungsweg des Biegeträgers führt und den Schutz der dahinter liegenden Bauteilen gewährleistet.

Durch eine dem RCAR-Barrieretest angepasste geometrische Struktur des Biegeträgers, wobei die Bombierung (Wölbung) des Mittelteils des Biegeträgers zurückgesetzt wird, wird eine Annäherung der Biegeträgerfront an die Stirnseiten der Crashboxen realisiert, und es gelingt, einen Stoßfängerquerträger mit einer verbesserten Aufnahmegeometrie für die Aufprallenergie anzubieten. Durch ein frühzeitiges Wirksamwerden der Crashboxen wird ein zu starkes Durchbiegen des Biegeträgers vermieden und die Gefahr eines Bruches des Biegeträgers vermindert.

Als positiver Nebeneffekt ist festzustellen, dass für den Stoßfängerquerträger nun deutlich weniger Bauraum benötigt wird.

Um den auf diese Weise dem RCAR-Barrieretest angepassten Stoßfängerquerträger nun auch der Pendelschlagprüfung (ECE-R42) anzupassen, sind weitere Maßnahmen erforderlich, wobei berücksichtigt wird, dass die Prallnase des Pendels bestimmte Normabmessungen besitzt und mit einem definierten Winkel und einer definierten Aufprallgeschwindigkeit auf den Biegeträger trifft. Eine ausreichende Festigkeit für die Pendelschlagprüfung erreicht man trotz Zurücksetzung der Bombierung nun dadurch, dass die seitliche Ausdehnung der angepassten und zurückgesetzten Biegeträgerfront innerhalb des Impact-Bereiches des Pendels liegt oder aber im Bereich der zurückgesetzten Biegeträgerfront Höcker angeordnet sind, so dass die Kräfte des Pendels weiterhin vom Biegeträger bzw. dem Stoßfängerquerträger aufgenommen werden können.

Diese Höcker erstrecken sich in einer bevorzugten Ausführungsform als Ausbuchtung über die gesamte Höhe des Biegeträgers, wobei die Geometrie der Höcker zusätzlich der Geometrie (Radius) der Prüfbarriere angepasst ist, wodurch eine weitere Verkürzung des Intrusionsweges der Barriere ermöglicht wird.

In einer bevorzugten Ausgestaltung der vorliegenden Erfindung wird die Bombierung des Biegeträgers insbesondere in dem Bereich zwischen den Höckern zur Aufnahme des Pendels weiter zurückgenommen, wobei sie in einer erfindungsgemäßen Augestaltung dem Radius der Barriere angepasst wird und dabei sogar eine konkave Form annehmen kann.

Somit wird gezielt die geometrische Struktur des Stoßfängerquerträgers der Pendelschlagprüfung ECE-R42 in Kombination mit dem RCAR-Barrieretest angepasst, um auf diese Weise die Bedingungen für beide Tests zu optimieren. Gleichzeitig kann dabei je nach Geometrie des Stoßfängerquerträgers bis zu 50 mm Bauraum eingespart werden, ohne Gefahr zu laufen, die Testbedingungen nicht mehr erfüllen zu können.

Besonders vorteilhaft kann die Erfindungsidee bei Stoßfängerquerträgern umgesetzt werden, die im Wesentlichen aus Kunststoffen bestehen, da bei diesen Ausgangsmaterialien im direkten Vergleich zu Metall die geometrischen Bedingungen zur Erfüllung der gesetzlichen Vorgaben in Bezug auf Festigkeit und Flexibilität noch wesentlich ungünstiger sind, so dass sich hier eine optimale Anpassung an die Prüfmittel besonders positiv auswirkt.

Bei einer weiteren vorteilhaften Ausführungsform der vorliegenden Erfindung sind die Crashboxen direkt am Biegeträger angeformt, wodurch eine besonders günstige Einleitung der Kraft beim Aufprall in die Crashboxen ermöglicht wird.

Im Folgenden wird die vorliegende Erfindung anhand von Zeichnungen ausführlich erläutert. Dabei zeigen
- Fig. 1: ein Schnittbild eines Stoßfängerquerträgers in der Draufsicht,
- Fig. 2: ein Schnittbild eines Stoßfängerquerträgers zusammen mit dem eines Pendels als Prüfmittel in der Draufsicht und
- Fig. 3: das Schnittbild eines Stoßfängerquerträgers zusammen mit einer RCAR-Barriere als Prüfmittel in der Draufsicht.

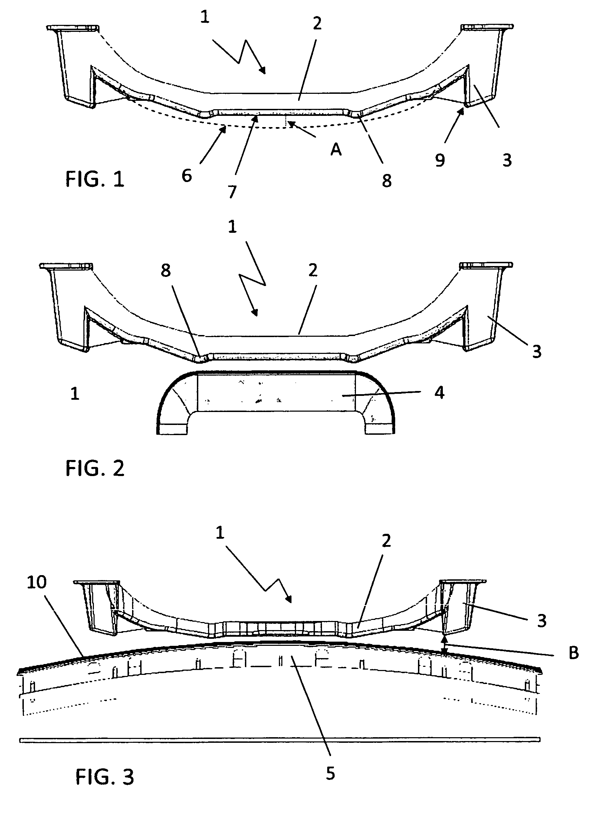

In der Figur 1 ist in der Draufsicht eine Schnittdarstellung eines Stoßfängerquerträgers 1 zu sehen, der aus einem Biegeträger 2 mit zwei seitlichen, direkt angeformten Crashboxen 3 aufgebaut ist. Zur Anpassung an den RCAR-Barrieretest als Prüfmittel wurde im vorliegenden Fall die Bombierung 6 zurückversetzt, so dass die Distanz zwischen Barriere 5 und Crashbox 3 verringert ist und im Falle eines Aufpralls die Aufprallenergie frühzeitig von den Crashboxen 3 absorbiert wird, wodurch die dahinter liegenden Bauteile geschützt werden.

Um diese Zurückversetzung der Bombierung 6 im vorliegenden Fall darzustellen, ist die Bombierung 6, so wie sie bei einer konventionellen Ausführung des Stoßfängerquerträgers 1 aussieht, in einer gestrichelten Linie eingezeichnet, wobei jetzt der Abstand A der gestrichelten Bombierungsfront 6 zur Biegeträgerfront 7 das Ausmaß an Bauraumeinsparung bei der erfindungsgemäßen Gestaltung des Stoßfängerquerträgers 1 wiedergibt.

Die Biegeträgerfront 7, die im Bereich zwischen den Höckern 8 zur Aufnahme und Einleitung der Kräfte des Pendels 4 bei der Pendelschlagprüfung nach ECE R42 besonders weit zurückgenommen ist, befindet sich nahezu auf Höhe der Stirnseiten 9 der Crashboxen 3. Auf diese Weise ist gewährleistet, dass beim Kontakt des Stoßfängerquerträgers 1 mit einer Barriere 5 bzw. einem gegnerischen Fahrzeug die Crashboxen 3 relativ schnell zum Einsatz kommen und damit die Energie des Aufpralls zum Schutz der dahinter liegenden Bauteile absorbieren können.

Die Geometrie der Höcker ist einerseits dem Radius der Barriere 5 angepasst, andererseits ist sie so gewählt, dass die Pendelenergie optimal vom Biegeträger 2 bzw. dem Stoßfängerquerträger 1 aufgenommen werden kann. Ebenso verhält es sich mit der zurückversetzten Biegeträgerfront 7, die im Bereich zwischen den Höckern 8 bevorzugt dem Radius der Barriere 5 angepasst ist.

Die Figur 2 zeigt den Stoßfängerquerträger 1 aus Figur 1 im Wechselspiel mit dem Pendel 4, der ebenfalls im Querschnitt dargestellt ist. Aus dieser Darstellung geht hervor, dass die Geometrie der Höcker 8 im Bereich der zurückversetzten Biegeträgerfront 7 exakt auf den Pendel 4 abgestimmt ist und somit die Kräfte des Pendels 4 beim Test aufnehmen können. Die Biegeträgerfront 7 ist zwischen den Höckern 8 weiter zurückversetzt und ermöglicht somit eine weitere Verkürzung des Intrusionsweges der Barriere 5.

In der Figur 3 ist der Stoßfängerquerträger 1 ebenfalls im Querschnitt dargestellt und in Kombination mit der RCAR-Barriere 5 zu sehen. Diese Darstellung zeigt, dass aus der Zurückversetzung der Biegeträgerfront 7 und der Anpassung an den Radius der Barriere 5 für den Fall des Aufpralls der Barriere 5 auf den Stoßfängerquerträger 1 ein verkürzter Abstand B der Barriere 5 zur Stirnseite 10 der Crashbox 3 resultiert. Dabei wird mit der erfindungsgemäßen Ausführung des Stoßfängerquerträgers 1 der Abstand B zwischen der Front 10 der Barriere 5 und der Stirnseite 9 der Crashbox 3 insgesamt um den Betrag des Abstandes A von der Bombierung 6 zur Biegeträgerfront 7 reduziert.

### Bezugszeichenliste

- 1: Stoßfängerquerträger
- 2: Biegeträger
- 3: Crashbox
- 4: Pendel
- 5: RCAR-Barriere
- 6: Bombierung
- 7: Biegeträgerfront
- 8: Höcker
- 9: Stirnseite Crashbox
- 10: Barrierefront

- A: Abstand Bombierung/Biegeträger
- B: Abstand RCAR-Barriere/Crashbox

## Patentansprüche

1. Stoßfängerquerträger (1) mit einem Biegeträger (2) und zwei seitlichen Crashboxen (3), wobei
der Stoßfängerquerträger eine an die Abmessungen von Prüfmitteln (4, 5) angepasste geometrische Struktur aufweist,
**dadurch gekennzeichnet, dass**
die angepasste geometrische Struktur eine Zurücksetzung der Bombierung (6) des Biegeträgers (2) bzw. der Biegeträgerfront (7) in Richtung Fahrzeugkarosserie umfasst,
die Zurücksetzung der Bombierung (6) dem Radius einer Barriere (5) des RCAR-Barrietests angepasst ist, und
die seitliche Ausdehnung der zurückgesetzten Biegeträgerfront (7) innerhalb des Impact-Bereiches eines Pendels (4) der Pendelschlagprüfung ECE R42 liegt ,und
dass im Bereich der angepassten geometrischen Struktur Höcker (6) zur Aufnahme und Einleitung der Kräfte des Pendels (4) in den Stoßfängerquerträger (1) vorgesehen sind.

2. Stoßfängerquerträger nach Anspruch 1, **dadurch gekennzeichnet, dass** die Höcker (8) dem Radius der Barriere (5) angepasst sind.

3. Stoßfängerquerträger nach Anspruch 1 oder 2, **dadurch gekennzeichnet, dass** der Stoßfängerquerträger (1) im Wesentlichen aus einem Kunststoff besteht.

4. Stoßfängerquerträger nach einem der Ansprüche 1 bis 3, **dadurch gekennzeichnet, dass** der stoßfängerquerträger (1) seitlich direkt angeformte Crashboxen (3) aufweist.

## Claims

1. Bumper cross member (1) with a flexural member (2) and two lateral crash boxes (3), where the bumper cross member has a geometric structure adapted to the dimensions of testing equipment (4, 5),
**characterised in that**
the adapted geometric structure consists of a recess in the curvature (6) of the flexural member (2) and of the flexural member front (7), respectively, in the direction of the vehicle bodywork, the recess of the curvature (6) is adapted to the radius of a crash barrier (5) of the RCAR bumper barrier test, and the lateral extension of the recessed flexural member front (7) lies within the impact zone of a pendulum (4) of the ECE R42 pendulum impact test, and that, in the region of the adapted geometric structure, protuberances (8) are provided to receive and conduct the forces of the pendulum (4) into the bumper cross member (1).

2. Bumper cross member according to Claim 1,
**characterised in that**
the protuberances (8) are adapted to the radius of the crash barrier (5).

3. Bumper cross member according to Claim 1 or 2,
**characterised in that**
the bumper cross member (1) consists essentially of a plastic material.

4. Bumper cross member according to one of Claims 1 to 3,
**characterised in that**
the bumper cross member (1) has crash boxes laterally moulded directly onto it.

## Revendications

1. Support transversal de pare-chocs (1) comprenant un longeron sollicité en flexion (2) et deux coussinets de collision latéraux (3), ce support transversal de pare-chocs présentant une structure géométrique adaptée aux dimensions de moyens de contrôle (4, 5),
**caractérisé en ce que**
la structure géométrique adaptée présente un retrait du bombage (6) du longeron sollicité en flexion (2) ou de la partie frontale (7) de ce longeron en direction de la carrosserie du véhicule, ce retrait du bombage (6) étant adapté au rayon d'une barrière (5) du test de barrière RCAR, et l'extension latérale de la partie frontale du longeron sollicité en traction rétractée (7) étant situé dans la zone d'impact d'un pendule (4) de l'essai de résistance au chocs à pendules ECE R 42, et dans la zone de structure géométrique adaptée il est prévu des bossages (8) pour la réception et la transmission des forces du pendule (4) dans le support transversal de pare-chocs (1).

2. Support transversal de pare-chocs conformé à la revendication 1, **caractérisé en ce que**
les bossages (8) sont adaptés au rayon de la barrière (5).

3. Support transversal de pare-chocs conforme à la revendication 1 ou 2,
**caractérisé en ce que**
le support transversal de pare-chocs (1) est essentiellement réalisé en un matériau synthétique.

4. Support transversal de pare-chocs conforme à l'une des revendications 1 à 3,
**caractérisé en ce que**
le support transversal de pare-chocs (1) comporte des coussinet de collision (3) directement moulés latéralement
